# EUROPÄISCHE PATENTSCHRIFT

(11) **EP 2 293 413 B1**
(45) Veröffentlichungstag und Bekanntmachung des Hinweises auf die Patenterteilung: **16.12.2015**
(21) Anmeldenummer: 10007475.6
(22) Anmeldetag: 20.07.2010
(51) Int. Cl.: H04L 12/40

(54) **Busfähige Anschlusseinheit für eine Elektroinstallation**
Bus-enabled connection unit for an electrical installation
Unité de raccordement compatible bus pour une installation électrique

(30) Priorität: 01.08.2009 DE 102009035828; 14.10.2009 DE 102009049378
(43) Veröffentlichungstag der Anmeldung: 09.03.2011
(73) Patentinhaber: ABB AG, 68309 Mannheim (DE)
(72) Erfinder: Heilig, Peter, Dipl.-Ing., 69121 Heidelberg (DE)

(56) Entgegenhaltungen:
- DE-A1-102006 030 706
- DE-A1-102007 009 552
- DE-A1-102008 004 798
- US-A1- 2006 047 480

## Beschreibung

Die Erfindung betrifft eine busfähige Anschlusseinheit zum Anschluss und zur Steuerung mindestens eines Betriebsgerätes in einer busorientierten programmierbaren Elektroinstallation, wobei die busfähige Anschlusseinheit modular aufgebaut ist und umfasst: eine Kontrolleinheit, für jedes an die Anschlusseinheit anschließbare Betriebsgerät eine diesem Betriebsgerät zugeordnete Steuerungseinheit als Modul zum Steuern des wenigstens einen Betriebsgerätes, einen Steuerbus zum Verbinden der wenigstens einen Steuerungseinheit mit der Kontrolleinheit, und wobei die Kontrolleinheit eine Busanschlusseinrichtung zum Anschluss der Anschlusseinheit an eine Busleitung der Elektroinstallation umfasst, gemäß dem Oberbegriff des Anspruchs 1.

Als Betriebsgerät im Sinne der Erfindung soll allgemein ein Gerät bezeichnet werden, das an die Steuerungseinheit angeschlossen werden kann. Es kann sich dabei um einen Verbraucher, beispielsweise einen Aktor oder eine Lampe oder ähnliches, oder auch um einen Sensor handeln. Insofern betrifft die Erfindung auch eine busfähige Anschlusseinheit zum Anschluss mindestens eines Sensors und zur Verarbeitung der Signale des mindestens einen Sensors.

Die Erfindung betrifft weiter ein Bussystem der Elektroinstallation, welches mehrere verteilt angeordnete und über eine Busleitung verbundene busfähige Anschlusseinheiten umfasst

Weiter betrifft die Erfindung ein Verfahren zum Parametrieren einer Steuerungseinheit zum Steuern wenigstens eines angeschlossenen Betriebsgerätes in einem Bussystem der Elektroinstallation, welches Bussystem mehrere verteilt angeordnete und über eine Busleitung verbundene busfähige Anschlusseinheiten umfasst, wobei wenigstens eine Anschlusseinheit eine Kontrolleinheit, wenigstens eine Steuerungseinheit, einen Steuerbus zum Verbinden der wenigstens einen Steuerungseinheit mit der Kontrolleinheit hat, und wobei die Kontrolleinheit eine Busanschlusseinrichtung zum Anschluss der Anschlusseinheit an die Busleitung der Elektroinstallation umfasst, gemäß dem Oberbegriff des Anspruchs 12.

Die Erfindung betrifft allgemein eine Vorrichtung und ein System für die Gebäudeautomatisierung mit wenigstens einem Funktionsmodul, auch Steuerungseinheit genannt, das über eine Busschnittstelle verfügt. Derartige Vorrichtungen sind insbesondere auf dem Gebiet der Gebäudetechnik bekannt.

Die DE 10 2006 030 706 A1 zeigt ein System zur Steuerung von busvernetzten Geräten mit einem Gateway über einen offenen Feldbus. Es umfasst einen Buscontroller zur Überwachung des Gateways und am Feldbus angeschlossene Busteilnehmer. Das Gateway soll mindestens aufweisen: eine Schnittstelle zum Feldbus und eine Schnittstelle zu einem Applikationsbus, einen Speicher für eine Buskonfiguration, einen Datenausgang für die Kom-munikation mit mindestens einem Busteilnehmer), eine Steuerleitung zum Ansprechen des ersten Teilnehmers, eine Versorgungsspannungseinspeisung und eine Hilfsspannungseinspeisung, mindestens eine Statusanzeige für Betriebszustände von Busteilnehmern und der Buskommunikation sowie ein Betätigungselement für den Start einer Buskonfiguration. Die Busteilnehmer sind Aktoren, die Folgendes aufweisen: eine Steuer- und Programmiereinheit zur Realisierung der Buskommunikation sowie der Funktionalität der Aktor-Applikation, einen Steuereingang zur Abfrage des vorhergehenden Teilnehmers und einen Steuerausgang zur Selektion des nachfolgenden Teilnehmers. Zur Vornahme von Aktorhandlungen und zum Melden von Aktorstellungen ist vom Gateway eine Kennnummer einschreibbar und werden ein Datenstrom sowie eine Hilfsspannung an den nachfolgenden Aktor durchgeschleift.

Die DE 10 2007 009 552 A1 zeigt ein modulares Gerät für die Heimautomatisierung, welches ein Basismodul aufweist und eine Vielzahl von Funktionsmodulen. Die Funktionsmodule werden über eine separate Versorgungsleitung mit Energie versorgt. Der Datenaustausch zwischen den Funktionsmodulen und dem Basismodul erfolgt über einen seriellen Datenbus, auf dem digitale Bussignale laufen. Das wesentliche Merkmal diese modularen Geräts ist es, dass Energie und Daten innerhalb des modularen Geräts auf verschiedenen Leitern übertragen werden. Die Funktionsmodule sind nebeneinander an das Basismodul angereiht. Dadurch ist eine flexible Anordnung der Module nicht möglich, und der maximal mögliche Ausbaugrad hängt von der verfügbaren Verteilerbreite ab. Das Netzwerkmanagement erfolgt hier auf Modulebene. Jedes der Funktionsmodule erhält eine eigene individuelle Adresse und ist unabhängig von den anderen angeschlossenen Funktionsmodulen zu konfigurieren und zu parametrisieren. Um alle angeschlossenen Funktionsmodule zu parametrisieren, muss also mehrfach ein Parametrisierungsdatensatz über das Bussystem übertragen werden, was einen erhöhten Programmieraufwand erfordert und die Downloadzeiten verlängert.

Ausgehend von den im Stand der Technik bekannten Lösungen ist es die Aufgabe der vorliegenden Erfindung, eine busfähige Anschlusseinheit zum Anschluss und zur Steuerung mindestens eines Betriebsgerätes in einer busorientierten programmierbaren Elektroinstallation zu schaffen, die einfach aufgebaut und einfach erweiterbar ist und bei der der Aufwand bei der Parametrisierung der Steuerungseinheiten reduziert ist.

Weiter ist es eine Aufgabe der vorliegenden Erfindung, ein Bussystem der Elektroinstallation, welches mehrere verteilt angeordnete und über eine Busleitung verbundene busfähige Anschlusseinheiten umfasst, wobei eine Anschlusseinheit eine Kontrolleinheit und wenigstens eine Steuerungseinheit zum Steuern wenigstens eines an die Anschlusseinheit angeschlossenen Betriebsgerätes hat, zu schaffen, bei dem der Aufwand bei der Parametrisierung der Steuerungseinheiten reduziert ist.

Schließlich ist es auch eine Aufgabe der vorliegenden Erfindung, ein vereinfachtes Verfahren zum Parametrieren einer Steuerungseinheit zum Steuern wenigstens eines angeschlossenen Betriebsgerätes in einem Bussystem der Elektroinstallation zu schaffen.

Die Aufgabe der Schaffung einer verbesserten busfähigen Anschlusseinheit wird durch eine busfähige Anschlusseinheit mit den Merkmalen des Anspruchs 1 gelöst.

Die Aufgabe zur Schaffung eines verbesserten Bussystems der Elektroinstallation wird durch ein Bussystem mit den Merkmalen des Anspruchs 10 gelöst.

Ein vereinfachtes Verfahren zum Parametrieren einer Steuerungseinheit ist durch ein Verfahren mit den Merkmalen des Anspruchs 12 angegeben.

Erfindungsgemäß ist bei einer busfähigen Anschlusseinheit der Steuerbus zur Übermittlung von Energie und Daten zwischen der Kontrolleinheit und der wenigstens einen Steuerungseinheit über dieselbe Busleitung des Steuerbusses eingerichtet, der Steuerbus ist zum parallelen Anschließen mehrerer Steuerungseinheiten eingerichtet, die Kontrolleinheit ist zur Parametrierung über die Busleitung eingerichtet, und die Parametrierung der wenigstens einen Steuereinrichtung erfolgt von der Kontrolleinheit aus über den Steuerbus.

Energie und Daten für die Steuerungseinheiten werden auf einem gemeinsamen Steuerbus übertragen. Dadurch ist der Aufbau vereinfacht. Dadurch, dass die Module oder Steuerungseinheiten parallel an den Steuerbus angeschlossen sind, ist ein Austausch von Modulen oder Steuerungseinheiten ohne Unterbrechung der restlichen Module möglich. Dadurch dass die Kontrolleinheit zur Parametrierung über die Busleitung eingerichtet ist die Parametrierung der wenigstens einen Steuereinrichtung von der Kontrolleinheit aus über den Steuerbus erfolgt, muss nur ein Gerät über die Busleitung des Bussystems parametriert werden, was den Programmieraufwand und die Downloadzeiten reduziert.

Gemäß einer vorteilhaften Ausführungsform der Erfindung ist der Steuerbus zur Energie- und Datenübertragung nach dem KNX-Standard eingerichtet. Die Kontrolleinheit und die mindestens eine Steuerungseinheit können gemäß einer weiteren vorteilhaften Ausführungsform der Erfindung eine standardisierte KNX-Busschnittstelle, auch als Busklemme bezeichnet, haben.

Gemäß einer weiteren vorteilhaften Ausführungsform der Erfindung umfasst die Kontrolleinheit eine Energieversorgungseinheit zur Energieversorgung der Kontrolleinheit und der mindestens einen Steuerungseinheit. Die Ausgangsspannung der Energieversorgung für die Versorgung der Steuerungseinheiten ist dabei so ausgelegt, dass sie dem KNX Standard entspricht und somit Standard KNX Busankopplungen für die Module oder Steuerungseinheiten verwendet werden können und somit für den Anwender eine einheitliche Technologie zum Einsatz kommen kann.

Durch die Verwendung von Standard-KNX-Busklemmen und Standard KNX-Busleitungen können die Module oder Steuerungseinheiten beliebig innerhalb einer Anschlusseinheit angeordnet werden.

KNX ist ein offener Standard für die Gebäudeautomatisierung und standardisiert nach EN50090 und ISO/IEC 14543. Der KNX Standard beschreibt die Übertragung von Steuerdaten über verschiedene Medien. Die Einsatzmöglichkeiten der verschiedenen Medien von KNX (Twisted Pair, Powerline, Funk und Ethernet) orientieren sich dabei an den Anforderungen bzw. Gegebenheiten typischer Gebäude. Twisted Pair ist ein häufig verwendetes Medium von KNX. Eine Möglichkeit der Kommunikation über das Medium Twisted Pair wird durch KNX TP1 beschrieben. Beim Medium Twisted Pair werden die Informationen auf eine Zweidrahtleitung aufgeprägt, die neben den Daten auch Energie zu den angeschlossenen Busteilnehmern überträgt. Hierbei werden die Datenbits "0" als Impulse mit einer Zeitdauer von 1/3 der Bitzeit aufgeprägt. Der anschließende Ausgleichsimpuls ermöglicht eine gleichspannungsneutrale Datenübertragung. Die Da-tenbits mit dem Wert "1" werden nicht aktiv übertragen. Der Bitwert "0" wird dadurch zum dominanten, der Wert "1" zum rezessiven Bit. Beginnen zwei Teilnehmer gleichzeitig zu senden, muss sich der Teilnehmer zurückziehen, der als erster eine "1" sendet (passiv), aber eine "0" empfängt. Der Teilnehmer mit dem dominanten Bit setzt sich durch.

In einer weiteren vorteilhaften Ausführungsform umfasst die Kontrolleinheit eine Bedien- und Anzeigeeinheit zur Auswahl, zum Steuern und für Statusanzeigen der Module oder Steuerungseinheiten.

In einer weiteren vorteilhaften Ausführungsform umfasst die mindestens eine Steuerungseinrichtung eine Steuerschaltung, in der eine vorparametrierte Grundfunktionalität hinterlegt ist. Eine Bedienung der Module oder Steuerungseinheiten ist dadurch auch dann möglich, wenn das Gesamtsystem noch nicht parametriert wurde, da in den Steuerungseinrichtungen je nach Anwendung eine feste Grundfunktionalität hinterlegt ist.

In einer weiteren vorteilhaften Ausführungsform umfasst die Kontrolleinheit eine Kontrollschaltung, in der die Funktionalität und Parametrierung der über den Steuerbus angeschlossenen Steuereinrichtungen hinterlegt ist. Dadurch, dass die Funktionalität der angeschlossenen Module oder Steuerungseinheiten in der Kontrolleinheit hinterlegt ist, muss nur ein Gerät parametriert werden, was den Programmieraufwand und die Downloadzeiten reduziert.

In einer weiteren vorteilhaften Ausführungsform umfasst die wenigstens eine Steuerungseinrichtung eine Programmiertaste. Die Module können neben der Programmiertaste auch noch eine LED zur Anzeige des Programmiermodus besitzen. Damit können die Module unabhängig von der Platzierung innerhalb der Anschlusseinheit zugeordnet werden. Dies erleichtert auch die Verdrahtung der Steuerungseinheiten, da diese einfach parallel an den Steuerbus angeschlossen werden können, ohne eine gewisse Reihenfolge berücksichtigen zu müssen.

In einer weiteren vorteilhaften Ausführungsform umfasst die Kontrolleinheit einen LAN-Anschluss zum Anschluss an die Busleitung, zur Kommunikation und Parametrierung. Die Kommunikation läuft in bevorzugter Ausführungsform über das standardisierte KNXnet/IP - Protokoll und ist somit mit vorhandenen Standard Tools wie z. B. ETS (EIBA Tool Software) parametrierbar.

Insgesamt liegt der Vorteil einer erfindungsgemäßen busfähigen Anschlusseinheit darin, dass durch Verwendung der Standard KNX-Technologie für die Kommunikation und Energieversorgung der Module oder Steuerungseinheiten auf existierende Einheiten der KNX - Gerätereihen zurückgegriffen werden kann, ohne die Hardware modifizieren zu müssen. Vor allem Investitionen in teure Werkzeugänderungen entfallen. Lediglich die Firmware muss auf den Betrieb innerhalb des Modularsystems angepasst werden. Es ist erfindungsgemäß eine modular aufgebaute Steuerungseinrichtung umfassend eine Kontrolleinheit und applikationsspezifische Modulen geschaffen worden.

Ein erfindungsgemäßes Bussystem der Elektroinstallation ist **dadurch gekennzeichnet, dass** der Steuerbus zur Übermittlung von Energie und Daten zwischen der Kontrolleinheit und der wenigstens einen Steuerungseinheit eingerichtet ist, dass die Kontrolleinheit eine Energieversorgungseinheit umfasst zur Energieversorgung der Kontrolleinheit und der mindestens einen Steuerungseinheit, und dass der Steuerbus zum parallelen Anschließen mehrerer Steuerungseinheiten eingerichtet ist.

Gemäß einer vorteilhaften Ausführungsform der Erfindung ist die Kontrolleinheit zur Parametrierung über die Busleitung eingerichtet, und die Parametrierung der wenigstens einen Steuereinrichtung erfolgt von der Kontrolleinheit aus über den Steuerbus.

Ein erfindungsgemäßes Verfahren zum Parametrieren einer Steuerungseinheit zum Steuern wenigstens eines angeschlossenen Verbrauchers in einem Bussystem der Elektroinstallation, welches Bussystem mehrere verteilt angeordnete und über eine Busleitung verbundene busfähige Anschlusseinheiten umfasst, wobei wenigstens eine Anschlusseinheit eine Kontrolleinheit, wenigstens eine Steuerungseinheit, einen Steuerbus zum Verbinden der wenigstens einen Steuerungseinheit mit der Kontrolleinheit hat, und wobei die Kontrolleinheit eine Busanschlusseinrichtung zum Anschluss der Anschlusseinheit an die Busleitung der Elektroinstallation umfasst, ist **dadurch gekennzeichnet, dass** die Funktionalität und Parametrierung der über den Steuerbus an die Kontrolleinheit angeschlossenen Steuerungseinheiten in einer Kontrollschaltung der Kontrolleinheit hinterlegt wird, dass die Kontrolleinheit über die Busleitung parametriert wird, und dass die wenigstens eine Steuereinrichtung von der Kontrolleinheit aus über den Steuerbus parametriert wird.

### Figurenbeschreibung

Figuren und Beschreibung dienen dem besseren Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

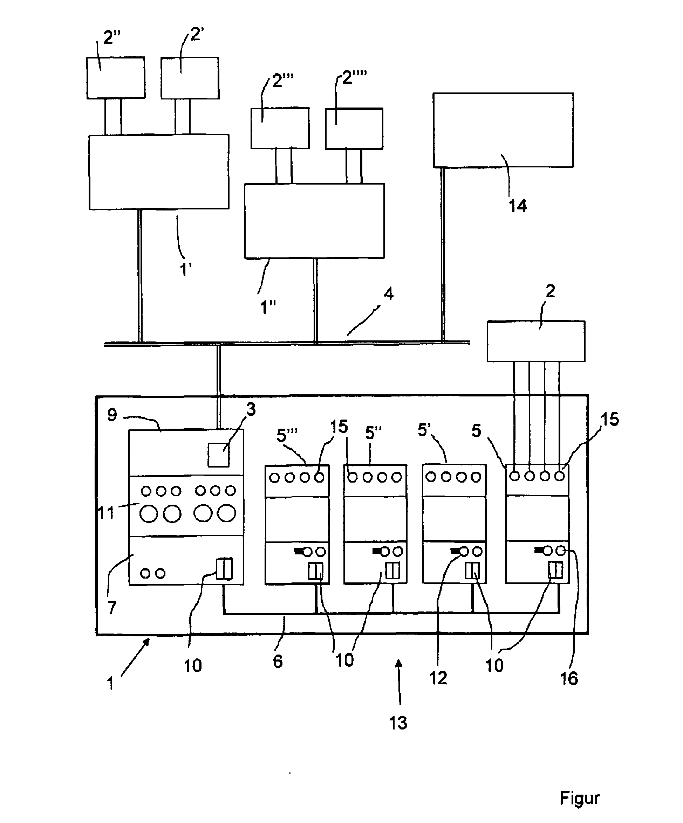

Dabei zeigt:
die einzige Figur ein Schema eines erfindungsgemäßen Bussystems, mit einem
   Schaltschema einer erfindungsgemäßen busfähigen Anschlusseinheit.

Die einzige Figur zeigt schematisch ein Bussystem 13 der Gebäudeinstallation mit einer Busleitung 4, an die busfähige Anschlusseinheiten 1, 1', 1" und eine Steuer- und Anzeigestation 14 angeschlossen sind. Bei dem Bussystem kann es sich beispielsweise um ein in der Gebäudetechnik standardisiertes Bussystem wie Konnex/EIB, LON, oder um ein LAN nach dem Ethernet-Standard oder ähnliches handeln.

An die Busleitung 4 sind exemplarisch drei busfähige Anschlusseinheiten 1, 1', 1" angeschlossen, es können in komplexeren Anlagen selbstverständlich auch mehr sein. An die busfähige Anschlusseinheit 1 ist hier exemplarisch ein Betriebsgerät 2, beispielsweise ein Verbraucher oder ein Sensor, angeschlossen. An die busfähigen Anschlusseinheiten 1', 1" sind exemplarisch jeweils zwei Betriebsgeräte 2', 2", 2"', 2"" angeschlossen. Auch hier können es selbstverständlich je nach Anwendung mehrere Betriebsgeräte an jeder Anschlusseinheit sein.

Betriebsgeräte können, wie bereits erwähnt, Aktoren oder Sensoren sein, wie beispielsweise Lampen, Antriebe, Fühler, Wächter, Schalter, Dimmer, Steller, etc.. Wenn ein Betriebsgerät eine Lampe oder ein Antrieb ist, verbraucht es in eingeschaltetem Zustand Energie und wird dann als Verbraucher bezeichnet.

Exemplarisch ist für die busfähige Anschlusseinheit 1 in einem Blockschaltbild der innere funktionale Aufbau dargestellt. Die Anschlusseinheit 1 ist modular aufgebaut und umfasst eine Kontrolleinheit 9 und mehrere Steuerungseinheiten 5, 5', 5", 5"'. Die Kontrolleinheit 9 kann auch als Controller bezeichnet werden. Die Steuerungseinheiten 5 sind anwendungsspezifisch ausgeführt und werden auch als Module bezeichnet. Für jede Art von Betriebsgerät gibt es applikationsspezifische Module, so beispielsweise spezielle Module zum Anschließen von Lampen, von Fühlern, von Antrieben etc. Jedes Modul 5, 5', 5", 5"' hat Anschlussklemmen 15 zum Anschließen der von dem jeweiligen Modul gesteuerten Busgeräte. Im vorliegend in der Figur gezeigten Fall ist nur an das Modul 5 ein Betriebsgerät 2 angeschlossen.

Die Kontrolleinheit 9 hat eine Busanschlusseinrichtung 3, hier einen LAN-Anschluss zur Kommunikation und Parametrierung über ein Ethernet LAN. Die Kommunikation wird in dem Beispiel über das standardisierte KNXnet/IP-Protokoll abgewickelt und ist daher mit vorhandenen Tools, wie z.B. ETS (EIBA Tool Software) parametrierbar.

Die Module 5, 5', 5", 5'" sind mit dem Controller 9 über einen internen Steuerbus 6 verbunden. Die Module sind parallel an den Bus angeschlossen, somit ist ein Austausch von Modulen möglich, ohne dass die anderen Module abgeschaltet oder entfernt werden müssten.

Der Steuerbus 6 verwendet eine Standard KNX-Technologie, d.h., Datenaustausch zwischen dem Controller 9 und den Modulen sowie die Energieversorgung der Module erfolgt über dieselbe physikalische Busleitung 6. Durch Verwendung der Standard KNX-Technologie für Kommunikation und Energieversorgung der Module kann auf existierende Einheiten einer existierenden KNX- Gerätereihe zurückgegriffen werden, ohne die Hardware modifizieren zu müssen. Vor allem Investitionen in teure Werkzeugänderungen entfallen; lediglich die Firmware muss auf den Betrieb innerhalb des Modularsystems angepasst werden. Der Datenverkehr zwischen dem Controller 9 und den Modulen 5, 5', 5", 5'" erfolgt gemäß dem bekannten KNX TP1-Übertragungs-Protokoll.

Der Controller 9 hat ein integriertes Netzteil 7 zur Energieversorgung der internen Elektronik sowie der angeschlossenen Module 5, 5', 5", 5"'. Die Ausgangsspannung für die Versorgung der Module 5, 5', 5", 5"' ist so ausgelegt, dass sie dem KNX Standard entspricht und somit Standard KNX Busankopplungen für die Module verwendet werden können. Damit kann für den Anwender eine einheitliche und vertraute Technologie zum Einsatz kommen.

Der Anschluss der Module 5, 5', 5", 5"' an den Controller 9 wird über Standard KNX Busschnittstellen 10, auch Busklemmen genannt, realisiert. Durch die Verwendung von Standard-Busklemmen und Standard-Busleitungen können die Module 5, 5', 5", 5'" beliebig innerhalb der Anschlusseinheit 1 platziert werden.

Zur Auswahl, zum Steuern und für Statusanzeigen der Module 5, 5', 5", 5"' ist eine Bedien- und Anzeigeeinheit 11 im Controller 9 integriert. Eine Bedienung der Module ist auch dann möglich, wenn das Gesamtsystem noch nicht parametriert wurde, da in den Modulen 5, 5', 5", 5"' je nach Anwendung eine feste Grundfunktionalität hinterlegt ist.

Die Funktionalität der angeschlossenen Module 5, 5', 5", 5"' ist im Controller 9 hinterlegt. Zur Parametrierung der Module 5, 5', 5", 5"' muss über das LAN nur der Controller 9 parametriert werden. Dieser gibt die modulspezifischen Parametersätze über den Steuerbus 6 intern an die jeweiligen Module 5, 5', 5". 5"' weiter. Dadurch, dass über das LAN nur ein Gerät, nämlich der Controller 9 parametriert werden muss, ist der Programmieraufwand und die Downloadzeiten reduziert.

Jedes der Module 5, 5', 5", 5"' besitzt eine Programmiertaste 12 sowie eine LED 16 zur Anzeige des Programmiermodus. Damit können die Module 5, 5', 5", 5"' unabhängig von der Platzierung innerhalb der Anschlusseinheit 1 zugeordnet werden. Dies erleichtert auch die Verdrahtung der Module, da diese einfach parallel an den Steuerbus 6 angeschlossen werden können, ohne eine vorgegebene Reihenfolge berücksichtigen zu müssen.

Das Bussystem 13 umfasst noch eine ebenfalls an die Busleitung 4 angeschlossene Steuer- und Anzeigestation 14, an welcher eine übergeordnete Auswertung oder Anzeige erfolgen kann.

Die Funktionen des Controllers 9 und der Module 5, 5', 5", 5"' können jeweils durch eine elektronische Schaltung realisiert sein, die einen Mikroprozessor umfasst, in dessen Anwendungsprogramms einige oder alle Funktionen als Programmmodule realisiert sind. Zu den als Programmmodul realisierbaren Funktionen zählen beispielsweise die Buskommunikation mit dem PLAN, die Buskommunikation über den internen Bus 6 nach KNX-TP1. die Konfiguration und Parametrierung des Controllers 9, die Parametrierung der Module 5, 5', 5', 5"'.

Zusammenfassend sollen hier noch einmal vorteilhafte Wirkungen der erfindungsgemäßen Anschlusseinheit und des erfindungsgemäßen Bussystems genannt werden:
○ Eine Zusätzliche Steuerleitung (Busleitung) ist nicht erforderlich, die vorhandene Infrastruktur, etwa ein LAN, das im Gebäude vorhanden ist, kann genutzt werden.
○ Die Parametrierung braucht nicht über KNX erfolgen, was lange Downloadzeiten erfordern würde, sondern kann über ein schnelles LAN, etwa Ethernet erfolgen.
○ Eine flexible Anordnung der Module oder Steuerungseinheiten in der Anschlusseinheit ist möglich.
○ Der Ausbaugrad der Anschlusseinheit ist von der Breite der vorhandenen Verteiler unabhängig, da die Steuerungseinheiten auch auf mehrere Reihen innerhalb eines Verteilers verteilt werden können.
○ Der Austausch von Modulen oder Steuerungseinheiten ist möglich, ohne dass die anderen Module abgeschaltet bzw. vom System getrennt werden müssen.
○ Spezielle Datenschienen zur Kontaktierung der Module sind nicht erforderlich.
○ Es sind Bedien- bzw. Diagnosemöglichkeiten am Gerät verfügbar.

### Bezugszeichenliste

- 1: busfähige Anschlusseinheit
- 2: Betriebsgerät
- 2': Betriebsgerät
- 2": Betriebsgerät
- 2"': Betriebsgerät
- 2"": Betriebsgerät
- 3: Busanschlusseinrichtung
- 4: Bussystem
- 5: Steuerungseinheit
- 5': Steuerungseinheit
- 5": Steuerungseinheit
- 5"': Steuerungseinheit
- 6: Steuerbus
- 7: Energieversorgungseinheit
- 9: Kontrolleinheit
- 10: KNX-Busschnittstelle
- 11: Bedien- und Anzeigeeinheit
- 12: Programmiertaste
- 13: Bussystem
- 14: Steuer- und Anzeigestation
- 15: Anschluss für Betriebsgeräte

## Patentansprüche

1. Busfähige Anschlusseinheit (1) zum Anschluss und zur Steuerung mindestens eines Betriebsgerätes (2) in einer busorientierten programmierbaren Elektroinstallation, *wobei die busfähige Anschlusseinheit modular aufgebaut ist und umfasst:*
- eine Kontrolleinheit (9),
- *für jedes an die Anschlusseinheit (1) anschließbare Betriebsgerät (2) eine diesem Betriebsgerät zugeordnete Steuerungseinheit (5) zum Steuern des wenigstens einen Betriebsgerätes (2),*
- einen Steuerbus (6) zum Verbinden der wenigstens einen Steuerungseinheit (5) mit der Kontrolleinheit (9),
und wobei die Kontrolleinheit (9) eine Busanschlusseinrichtung (3) zum Anschluss der Anschlusseinheit (1) an eine Busleitung (4) der Elektroinstallation umfasst,
**dadurch gekennzeichnet, dass** der Steuerbus (6) zur Übermittlung von Energie und Daten zwischen der Kontrolleinheit (9) und der wenigstens einen Steuerungseinheit *(5) über dieselbe Busleitung des Steuerbusses (6)* eingerichtet ist, dass der Steuerbus zum parallelen Anschließen mehrerer Steuerungseinheiten (5) eingerichtet ist, dass die Kontrolleinheit (9) zur Parametrierung über die Busleitung (4) eingerichtet ist, und dass die Parametrierung der wenigstens einen Steuerungseinheit (5) von der Kontrolleinheit (9) aus über den Steuerbus (6) erfolgt.

2. Busfähige Anschlusseinheit (1) nach Anspruch 1, **dadurch gekennzeichnet, dass** der Steuerbus zur Energie- und Datenübertragung nach dem KNX-Standard eingerichtet ist.

3. Busfähige Anschlusseinheit (1) nach Anspruch 1, **dadurch gekennzeichnet, dass** die Kontrolleinheit (9) und die mindestens eine Steuerungseinheit (5) eine KNX-Busschnittstelle (10) haben.

4. Busfähige Anschlusseinheit (1) nach Anspruch 1, **dadurch gekennzeichnet, dass** die Kontrolleinheit (9) eine Bedien- und Anzeigeeinheit (11) umfasst.

5. Busfähige Anschlusseinheit (1) nach Anspruch 1, **dadurch gekennzeichnet, dass** die mindestens eine Steuerungseinheit (5) eine Steuerschaltung umfasst, in der eine vorparametrierte Grundfunktionalität hinterlegt ist.

6. Busfähige Anschlusseinheit (1) nach Anspruch 1, **dadurch gekennzeichnet, dass** die Kontrolleinheit (9) eine Kontrollschaltung umfasst, in der die Funktionalität und Parametrierung der über den Steuerbus (6) angeschlossenen Steuereinrichtungen (5) hinterlegt ist.

7. Busfähige Anschlusseinheit (1) nach Anspruch 1, **dadurch gekennzeichnet, dass** die Kontrolleinheit (9) eine Energieversorgungseinheit (7) umfasst zur Energieversorgung der Kontrolleinheit (9) und der mindestens einen Steuerungseinheit (5).

8. Busfähige Anschlusseinheit (1) nach Anspruch 1, **dadurch gekennzeichnet, dass** die wenigstens eine Steuerungseinrichtung (5) eine Programmiertaste (12) und/oder eine Programmier-LED (16) umfasst.

9. Busfähige Anschlusseinheit (1) nach Anspruch 1, **dadurch gekennzeichnet, dass** die Kontrolleinheit (9) einen LAN-Anschluss zum Anschluss an die Busleitung (4) umfasst.

10. Bussystem (13) der Elektroinstallation, welches mehrere verteilt angeordnete und über eine Busleitung (4) verbundene busfähige Anschlusseinheiten (1) gemäß einem der Ansprüche 1 bis 9 umfasst.

11. Bussystem (13) nach Anspruch 10, **dadurch gekennzeichnet, dass** die Kontrolleinheit (9) zur Parametrierung über die Busleitung (4) eingerichtet ist, und dass die Parametrierung der wenigstens einen Steuereinrichtung (5) von der Kontrolleinheit (9) aus über den Steuerbus (6) erfolgt.

12. Verfahren zum Parametrieren einer Steuerungseinheit (5) zum Steuern wenigstens eines angeschlossenen Betriebsgerätes in einem Bussystem (13) der Elektroinstallation, welches Bussystem mehrere verteilt angeordnete und über eine Busleitung (4) verbundene busfähige Anschlusseinheiten (1) zum Anschluss und zur Steuerung mindestens eines Betriebsgerätes (2) umfasst, wobei wenigstens eine busfähige Anschlusseinheit (1) modular aufgebaut ist und
- eine Kontrolleinheit (9),
- für jedes an die Anschlusseinheit (1) anschließbare Betriebsgerät (2) eine diesem Betriebsgerät zugeordnete wenigstens eine Steuerungseinheit (5) zum Steuern des wenigstens einen Betriebsgerätes,
- sowie einen Steuerbus (6) zum Verbinden der wenigstens einen Steuerungseinheit (5) mit der Kontrolleinheit (9) hat,
und wobei die Kontrolleinheit (9) eine Busanschlusseinrichtung (3) zum Anschluss der Anschlusseinheit (1) an die Busleitung (4) der Elektroinstallation umfasst,
**dadurch gekennzeichnet, dass** Energie und Daten zwischen der Kontrolleinheit (9) und der wenigstens einen Steuereinheit (5) über dieselbe Busleitung des Steuerbusses übermittelt werden, dass die Funktionalität und Parametrierung der über den Steuerbus (6) an die Kontrolleinheit (9) angeschlossenen Steuerungseinheiten (5) in einer Kontrollschaltung der Kontrolleinheit (9) hinterlegt wird, dass die Kontrolleinheit (9) über die Busleitung (4) parametriert wird, und dass die wenigstens eine Steuereinrichtung (5) von der Kontrolleinheit (9) aus über den Steuerbus (6) parametriert wird.

## Claims

1. Bus-enabled connection unit (1) for connecting and controlling at least one operating device (2) in a bus-oriented programmable electrical installation, the bus-enabled connection unit having a modular structure and comprising:
- a monitoring unit (9),
- for each operating device (2) which can be connected to the connection unit (1), a control unit (5) which is assigned to said operating device and is intended to control the at least one operating device (2),
- a control bus (6) for connecting the at least one control unit (5) to the monitoring unit (9), and the monitoring unit (9) comprising a bus connection device (3) for connecting the connection unit (1) to a bus line (4) of the electrical installation,
**characterized in that** the control bus (6) is set up to transmit energy and data between the monitoring unit (9) and the at least one control unit (5) using the same bus line of the control bus (6), **in that** the control bus is set up to connect a plurality of control units (5) in a parallel manner, **in that** the monitoring unit (9) is set up for parameterization via the bus line (4), and **in that** the at least one control unit (5) is parameterized from the monitoring unit (9) via the control bus (6).

2. Bus-enabled connection unit (1) according to Claim 1, **characterized in that** the control bus is set up to transmit energy and data according to the KNX standard.

3. Bus-enabled connection unit (1) according to Claim 1, **characterized in that** the monitoring unit (9) and the at least one control unit (5) have a KNX bus interface (10).

4. Bus-enabled connection unit (1) according to Claim 1, **characterized in that** the monitoring unit (9) comprises an operating and display unit (11).

5. Bus-enabled connection unit (1) according to Claim 1, **characterized in that** the at least one control unit (5) comprises a control circuit which stores a pre-parameterized basic functionality.

6. Bus-enabled connection unit (1) according to Claim 1, **characterized in that** the monitoring unit (9) comprises a monitoring circuit which stores the functionality and parameterization of the control devices (5) connected via the control bus (6).

7. Bus-enabled connection unit (1) according to Claim 1, **characterized in that** the monitoring unit (9) comprises an energy supply unit (7) for supplying energy to the monitoring unit (9) and to the at least one control unit (5).

8. Bus-enabled connection unit (1) according to Claim 1, **characterized in that** the at least one control device (5) comprises a programming button (12) and/or a programming LED (16).

9. Bus-enabled connection unit (1) according to Claim 1, **characterized in that** the monitoring unit (9) comprises a LAN connection for connection to the bus line (4).

10. Bus system (13) of the electrical installation, which comprises a plurality of bus-enabled connection units (1) according to one of Claims 1 to 9 which are arranged in a distributed manner and are connected via a bus line (4).

11. Bus system (13) according to Claim 10, **characterized in that** the monitoring unit (9) is set up for parameterization via the bus line (4), and **in that** the at least one control device (5) is parameterized from the monitoring unit (9) via the control bus (6).

12. Method for parameterizing a control unit (5) for controlling at least one connected operating device in a bus system (13) of the electrical installation, which bus system comprises a plurality of bus-enabled connection units (1) which are arranged in a distributed manner, are connected via a bus line (4) and are intended to connect and control at least one operating device (2), at least one bus-enabled connection unit (1) having a modular structure and having
- a monitoring unit (9),
- for each operating device (2) which can be connected to the connection unit (1), at least one control unit (5) which is assigned to said operating device and is intended to control the at least one operating device,
- and a control bus (6) for connecting the at least one control unit (5) to the monitoring unit (9),
and the monitoring unit (9) comprising a bus connection device (3) for connecting the connection unit (1) to the bus line (4) of the electrical installation,
**characterized in that** energy and data are transmitted between the monitoring unit (9) and the at least one control unit (5) using the same bus line of the control bus, **in that** the functionality and parameterization of the control units (5) connected to the monitoring unit (9) via the control bus (6) are stored in a monitoring circuit of the monitoring unit (9), **in that** the monitoring unit (9) is parameterized via the bus line (4), and **in that** the at least one control device (5) is parameterized from the monitoring unit (9) via the control bus (6).

## Revendications

1. Unité de raccordement compatible bus (1) destinée à raccorder et à commander au moins un équipement (2) dans une installation électrique programmable orientée bus, dans laquelle l'unité de raccordement compatible bus est réalisée de manière modulaire et comprend :
une unité de contrôle (9),
- pour chaque équipement (2) pouvant être raccordé à l'unité de raccordement (1), une unité de commande (5) associée audit équipement pour commander l'au moins un équipement (2),
- un bus de commande (6) destiné à connecter l'au moins une unité de commande (5) à l'unité de contrôle (9),
et dans lequel l'unité de contrôle (9) comprend un dispositif de raccordement de bus (3) destiné à raccorder l'unité de raccordement (1) à une ligne de bus (4) de l'installation électrique,
**caractérisée en ce que** le bus de commande (6) est conçu pour transmettre de l'énergie et des données entre l'unité de contrôle (9) et l'au moins une unité de commande (5) par l'intermédiaire de la même ligne de bus du bus de commande (6), **en ce que** le bus de commande est conçu pour raccorder en parallèle de multiples unités de commande (5), **en ce que** l'unité de contrôle (9) est conçue pour effectuer un paramétrage par l'intermédiaire de la ligne de bus (4) et **en ce que** le paramétrage de l'au moins une unité de commande (5) est effectué par l'unité de contrôle (9) par l'intermédiaire du bus de commande (6).

2. Unité de raccordement compatible bus (1) selon la revendication 1, **caractérisée en ce que** le bus de commande est conçu pour transmettre de l'énergie et des données conformément à la norme KNX.

3. Unité de raccordement compatible bus (1) selon la revendication 1, **caractérisée en ce que** l'unité de contrôle (9) et l'au moins une unité de commande (5) comportent une interface de bus KNX (10).

4. Unité de raccordement compatible bus (1) selon la revendication 1, **caractérisée en ce que** l'unité de contrôle (9) comprend une unité d'exploitation et d'affichage (11).

5. Unité de raccordement compatible bus (1) selon la revendication 1, **caractérisée en ce que** l'au moins une unité de commande (5) comprend un circuit de commande dans lequel est enregistrée une fonctionnalité de base paramétrée à l'avance.

6. Unité de raccordement compatible bus (1) selon la revendication 1, **caractérisée en ce que** l'unité de contrôle (9) comprend un circuit de contrôle dans lequel sont enregistrés la fonctionnalité et un paramétrage des dispositifs de commande (5) raccordés par l'intermédiaire du bus de commande (6).

7. Unité de raccordement compatible bus (1) selon la revendication 1, **caractérisée en ce que** l'unité de contrôle (9) comprend une unité d'alimentation en énergie (7) destinée à alimenter en énergie l'unité de contrôle (9) et l'au moins une unité de commande (5).

8. Unité de raccordement compatible bus (1) selon la revendication 1, **caractérisée en ce que** l'au moins un dispositif de commande (5) comprend une touche de programmation (12) et/ou une LED de programmation (16).

9. Unité de raccordement compatible bus (1) selon la revendication 1, **caractérisée en ce que** l'unité de contrôle (9) comprend un raccord LAN pour raccordement à la ligne de bus (4).

10. Système de bus (13) de l'installation électrique, comprenant une pluralité d'unités de raccordement (1) compatibles bus selon l'une quelconque des revendications 1 à 9, disposées de manière répartie et connectées par l'intermédiaire d'une ligne de bus (4).

11. Système de bus (13) selon la revendication 10, **caractérisé en ce que** l'unité de contrôle (9) est conçue pour effectuer un paramétrage par l'intermédiaire de la ligne de bus (4) et **en ce que** le paramétrage de l'au moins un dispositif de commande (5) est effectué par l'unité de contrôle (9) par l'intermédiaire du bus de commande (6).

12. Procédé de paramétrage d'une unité de commande (5) destinée à commander au moins un équipement raccordé dans un système de bus (13) de l'installation électrique, lequel système de bus comprend de multiples unités de raccordement (1) compatibles bus disposées de manière répartie et connectées par l'intermédiaire d'une ligne de bus (4) pour raccorder et commander au moins un équipement (2), dans lequel au moins une unité de raccordement compatible bus (1) est réalisée de manière modulaire et comporte
- une unité de contrôle (9),
- pour chaque équipement (2) pouvant être raccordé à l'unité de raccordement (1), au moins une unité de commande (5) associée à l'équipement pour commander l'au moins un équipement,
- ainsi qu'un bus de commande (6) destiné à connecter l'au moins une unité de commande (5) à l'unité de contrôle (9),
et dans lequel l'unité de contrôle (9) comprend un dispositif de raccordement de bus (3) destiné à raccorder l'unité de raccordement (1) à la ligne de bus (4) de l'installation électrique,
**caractérisé en ce que** de l'énergie et des données sont transmises entre l'unité de contrôle (9) et l'au moins une unité de commande (5) par l'intermédiaire de la même ligne de bus du bus de commande (6), **en ce que** la fonctionnalité et le paramétrage des unités de commande (5) raccordées par l'intermédiaire du bus de commande (6) à l'unité de contrôle (9) sont enregistrés dans un circuit de contrôle de l'unité de contrôle (9), **en ce que** l'unité de contrôle (9) est paramétrée par l'intermédiaire de la ligne de bus (4) et **en ce que** l'au moins un dispositif de commande (5) est paramétré par l'unité de contrôle (9) par l'intermédiaire du bus de commande (6).
